# EUROPÄISCHE PATENTSCHRIFT

(11) **EP 2 084 037 B1**
(45) Veröffentlichungstag und Bekanntmachung des Hinweises auf die Patenterteilung: **10.08.2011**
(21) Anmeldenummer: 07821021.8
(22) Anmeldetag: 08.10.2007
(51) Int. Cl.: B60R 21/00, B60R 21/02

(54) **BEDIENVORRICHTUNG FÜR EIN KRAFTFAHRZEUG MIT EINEM BEDIENHEBEL**
OPERATING DEVICE FOR A MOTOR VEHICLE, WITH AN OPERATING LEVER
DISPOSITIF DE COMMANDE POUR UN VEHICULE AUTOMOBILE AVEC UN LEVIER DE COMMANDE

(30) Priorität: 10.10.2006 DE 102006047727
(43) Veröffentlichungstag der Anmeldung: 05.08.2009
(73) Patentinhaber: Leopold Kostal GmbH & Co. KG, 58513 Lüdenscheid (DE)
(72) Erfinder: MOLDENHAUER, Knut, 58097 Hagen (DE); VOLMER, Werner, 58640 Iserlohn (DE)
(86) Internationale Anmeldenummer: PCT/EP2007/060648
(87) Internationale Veröffentlichungsnummer: WO 2008/043730

(56) Entgegenhaltungen:
- EP-A- 1 094 252
- FR-A- 2 860 889
- US-A- 1 861 394
- US-A- 3 795 156
- US-A- 5 953 963

## Beschreibung

Die Erfindung betrifft eine Bedienvorrichtung für ein Kraftfahrzeug, mit einem Bedienhebel ohne integrierte Schaltelemente, der beweglich an einem Gehäuse angelenkt ist.

Bei Bedienvorrichtungen in Kraftfahrzeugen, welche einen Bedienhebel aufweisen, ist es bei einem Unfall nicht auszuschließen, dass der Bedienhebel abbricht. Nach einem Abbrechen soll sich der Hebel nicht unkontrolliert durch den Fahrzeuginnenraum bewegen, da sich hierdurch eine zusätzliche Gefährdung der Fahrzeuginsassen ergäbe.

Bei Hebeln, die elektrische Schaltelemente (Drehringe, Tasten, o. ä.) am Hebelende aufweisen, werden abgebrochene Hebel zumeist durch die durch den Hebel geführten Leitungssätze festgehalten.

Hebel mit integrierten Schaltelementen sind beispielsweise aus der EP-A-1 094 252, FR-A-2 860 889 und der US-A-1 861 394 bekannt. In den Dokumenten US-A-3 795 156 und US-A-5 953 963 sind Beschreibungen von Bedienelementen veröffentlicht worden, die jeweils einen Hebel ohne integrierte Schaltelemente aufweisen.

Es stellte sich die Aufgabe, eine Bedienvorrichtung zu schaffen, bei der ein Hebel ohne integrierte Schaltelemente bei einem Unfall sicher am Lenksäulenmodul festgehalten wird.

Die Aufgabe wird erfindungsgemäß dadurch gelöst, dass eine Fangleine einerseits mit dem Betätigungsarm des Bedienhebels und andererseits mit einem Verbindungsmittel zwischen Bedienhebel und Gehäuse oder mit dem Gehäuse verbunden ist.

Die Fangleine bewirkt, dass ein abgebrochener Bedienhebel und speziell der Betätigungsarm des Bedienhebels mit weiteren Teilen der Bedienvorrichtung verbunden bleibt.

Die Fangleine kann hierbei durch einen Faden, eine Schnur, ein Seil oder einen Draht realisiert sein, wobei Material und Querschnittsstärke der Fangleine, unter der Voraussetzung einer ausreichenden Zugbelastbarkeit, frei wählbar sind. Kriterien bei der Auswahl von Material und Ausführung sind insbesondere die einfache Montierbarkeit innerhalb des Hebels und ein möglichst geringer Kostenaufwand.

Die Fangleine besteht vorzugsweise aus Kunststoff und kann insbesondere auch durch eine Anformung am Betätigungsarm des Bedienhebels und/oder am Gehäuse gebildet sein.

Vorteilhafte Ausführungen und Weiterbildungen der erfindungsgemäßen Bedienvorrichtung sind in den abhängigen Ansprüchen angeführt.

Im folgenden soll ein Ausführungsbeispiel der Erfindung anhand der Zeichnung dargestellt und näher erläutert werden. Die Figuren zeigen hierbei einen Bedienhebel einer erfindungsgemäßen Bedienvorrichtung in zwei verschiedenen Ansichten.

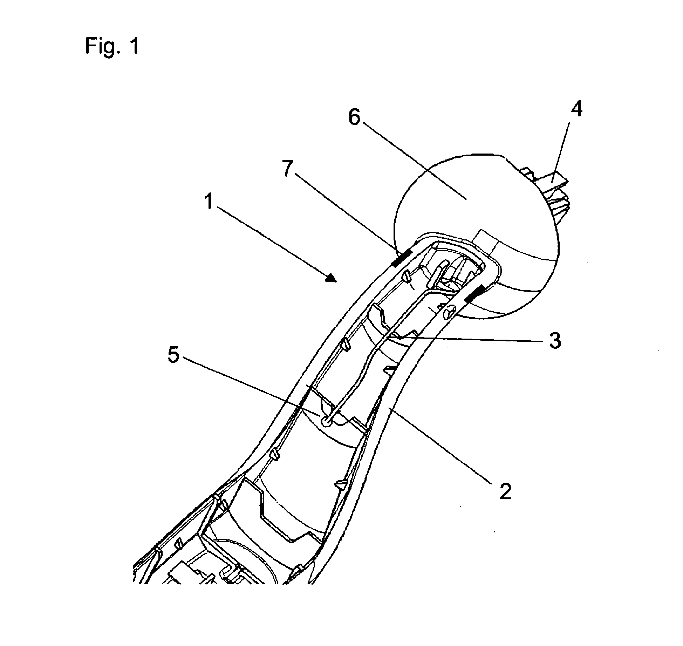

Die Figur 1 zeigt den Bedienhebel (1) mit einem geschnitten dargestellten Betätigungsarm (2). Der als Hohlkörper ausgebildete Betätigungsarm (2) weist zur mechanischen Stabilisierung im Inneren mehrere Querstreben (5) auf. Mit einer dieser Querstreben (5) ist eine Fangleine (3) verbunden, welche insbesondere durch eine Kunststoffanformung an der Querstrebe (5) gebildet sein kann. Die Fangleine (3) erstreckt sich, ausgehend von der Querstrebe (5) in Längsrichtung bis in das Innere einer halbkugelförmigen Anformung (6) am Ende des Betätigungsarms (2).

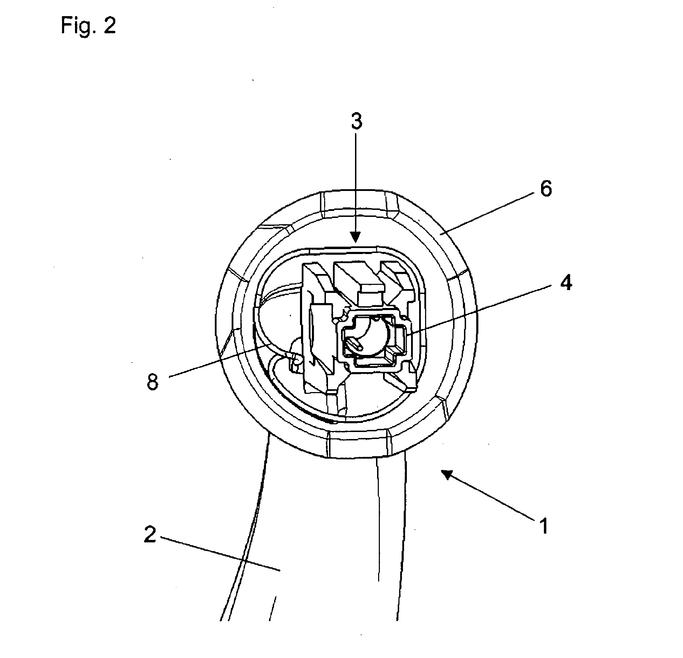

Wie aus der Figur 2 hervorgeht, bildet die halbkugelförmige Anformung (6) einen Hohlraum aus, in dem hebelseitige Verbindungsmittel (4) zur Anlenkung des Bedienhebels (1) an dem nicht dargestellten Gehäuse der Bedienvorrichtung angeordnet sind und von den Wänden der halbkugelförmigen Anformung (6) zumindest teilweise umfaßt werden. Des weiteren zeigt die Figur 2, dass die Fangleine (3) als eine Schlinge (8) lose um die Verbindungsmittel (4) herumgelegt ist.

Der Betätigungsarm (2) weist nahe der halbkugelförmigen Anformung (6) einen mechanisch geschwächten Abschnitt auf, der als Sollbruchstelle (7) vorgesehen ist. Kommt es, etwa bei einem Unfall, zu einem Abbrechen des Betätigungsarms (2), so bricht dieser daher mit hoher Wahrscheinlichkeit im Bereich der Sollbruchstelle (7).

Der abgebrochene Betätigungsarm (2) bleibt durch die Fangleine (3) mit dem Gehäuse des Bedienelements verbunden, da sich die Schlinge der Fangleine (3) nun fest um die Verbindungsmittel (4) legt. Damit wird ein untrollkontrolliertes Herumfliegen des abgebrochenen Betätigungsarms (2) und daraus resultierende Gefährdungen wirkungsvoll vermieden.

Es ist vorteilhaft, dass die Fangleine (3) zunächst als Schlinge (8) lose um das Verbindungsmittel (4) herumgeführt ist, da so die Fangleine (3) etwas länger ausgeführt ist, als zum Überbrücken der beiden Anbindungsstellen der Fangleine (3) erforderlich ist. Hierdurch wird erreicht, dass die Krafteinwirkung, die zum Abbrechen des Betätigungsarms (2) führt nicht gleichzeitig die Fangleine (3) zerreißt.

Bei einer Variante der dargestellten Anordnung kann vorgesehen sein, den dem Betätigungsarm abgewandten Abschnitt der Fangleine nicht am Verbindungsmittel sondern am oder innerhalb des nicht dargestellten Gehäuses festzulegen. Eine derartige Ausführung ist besonders dann vorteilhaft, wenn ein Brechen der Verbindungsmittel im Anlenkungsbereich des Betätigungsarms am Gehäuse nicht auszuschließen ist.

### Bezugszeichen

- 1: Bedienhebel
- 2: Betätigungsarm
- 3: Fangleine
- 4: Verbindungsmittel
- 5: Querstrebe(n)
- 6: halbkugelförmige Anformung
- 7: Sollbruchstelle
- 8: Schlinge

## Patentansprüche

1. Bedienvorrichtung für ein Kraftfahrzeug, mit einem Bedienhebel ohne integrierte Schaltelemente, der beweglich an einem Gehäuse angelenkt ist,
**dadurch gekennzeichnet,**
**dass** eine Fangleine (3) einerseits mit dem Betätigungsarm (2) des Bedienhebels (1) und andererseits mit einem Verbindungsmittel (4) zwischen Bedienhebel (1) und Gehäuse oder mit dem Gehäuse verbunden ist.

2. Bedienvorrichtung nach Anspruch 1, **dadurch gekennzeichnet, dass** die Fangleine (3) durch Vergießen oder Verkleben mit dem Betätigungsarm (2), dem Verbindungsmittel (4) und/oder mit dem Gehäuse verbunden ist.

3. Bedienvorrichtung nach Anspruch 1, **dadurch gekennzeichnet, dass** die Fangleine (3) mittels Knoten oder Schlingen mit dem Betätigungsarm (2), dem Verbindungsmittel (4) und/oder mit dem Gehäuse verbunden ist.

4. Bedienvorrichtung nach Anspruch 1, **dadurch gekennzeichnet, dass** die Fangleine (3) ein Kunststofffaden ist.

5. Bedienvorrichtung nach Anspruch 4, **dadurch gekennzeichnet, dass** die Fangleine (3) ein Nylonfaden ist.

6. Bedienvorrichtung nach Anspruch 1, **dadurch gekennzeichnet, dass** die Fangleine (3) ein Metalldraht ist oder einen Metalldraht aufweist.

7. Bedienvorrichtung nach Anspruch 1, **dadurch gekennzeichnet, dass** die Fangleine (3) länger ist als der direkten Abstand seiner Anbindungsstellen.

8. Bedienvorrichtung nach Anspruch 1, **dadurch gekennzeichnet, dass** die Fangleine (3) zwischen seinen Anbindungsstellen mindestens doppelt geführt ist. -

## Claims

1. Operating device for a motor vehicle having an operating lever without any integrated switching elements and being moveably hinged to a housing
**characterised in that**
an arresting cord (3) is connected with its the one end to the actuating arm (2) of the operating lever (1) and with its other end to a fastening means (4) between the operating lever (1) and the housing, or to the housing.

2. Operating device in accordance with Claim 1, **characterised in that** the arresting cord (3) is connected to the actuating arm (2), the fastening means (4) and/or the housing by means of encapsulation or by glueing.

3. Operating device in accordance with Claim 1, **characterised in that** the arresting cord (3) is connected to the actuating arm (2), the fastening means (4) and/or the housing by means of knotting or looping.

4. Operating device in accordance with Claim 1, **characterised in that** the arresting cord (3) is a synthetic string.

5. Operating device in accordance with Claim 4, **characterised in that** the arresting cord (3) is a nylon string.

6. Operating device in accordance with Claim 1, **characterised in that** the arresting cord (3) is a metal wire or features a metal wire.

7. Operating device in accordance with Claim 1, **characterised in that** the arresting cord (3) is longer than the direct distance between its connection points.

8. Operating device in accordance with Claim 1, **characterised in that** the arresting cord (3) is at least double-guided between its connection points.

## Revendications

1. Dispositif de commande pour un véhicule automobile, avec un levier de commande, sans éléments de commutation intégrés, qui est monté mobile, articulé sur un carter, **caractérisé en ce qu'**une corde de retenue (3) est reliée, d'une part, au bras d'actionnement (2) du levier de commande (1), et, d'autre part, à un moyen de liaison (4) entre le levier de commande (1) et le carter ou au carter.

2. Dispositif de commande selon la revendication 1, **caractérisé en ce que** la corde de retenue (3) est reliée au bras d'actionnement (2), au moyen de liaison (4) et / ou au carter, par coulée ou par collage.

3. Dispositif de commande selon la revendication 1, **caractérisé en ce que** la corde de retenue (3) est reliée au bras d'actionnement (2), au moyen de liaison (4) et / ou au carter, par des noeuds ou des boucles.

4. Dispositif de commande selon la revendication 1, **caractérisé en ce que** la corde de retenue (3) est un fil en matière synthétique.

5. Dispositif de commande selon la revendication 4, **caractérisé en ce que** la corde de retenue (3) est un fil de nylon.

6. Dispositif de commande selon la revendication 1, **caractérisé en ce que** la corde de retenue (3) est un fil métallique ou est dotée d'un fil métallique.

7. Dispositif de commande selon la revendication 1, **caractérisé en ce que** la corde de retenue (3) est plus longue que l'intervalle direct de ses points de raccordement.

8. Dispositif de commande selon la revendication 1, **caractérisé en ce que** la corde de retenue (3) est au moins double entre ses points de raccordement.
